# EUROPEAN PATENT APPLICATION

(11) **EP 3 176 900 A2**
(43) Date of publication of application: **07.06.2017**
(21) Application number: 15827726.9
(22) Date of filing: 23.07.2015
(51) Int. Cl.: H02J 3/18, G05F 1/10

(54) **POWER CONSUMPTION REDUCTION DEVICE**

(30) Priority: 30.07.2014 DO 2014000176
(71) Applicant: Nuñez Caceres, Nestor Rafael, Provincia Santo Domingo 11501 (DO)
(72) Inventor: Nuñez Caceres, Nestor Rafael, Provincia Santo Domingo 11501 (DO)
(74) Representative: Capitán García, Maria Nuria
(86) International application number: PCT/DO2015/000002
(87) International publication number: WO 2016/015737

(57) **Abstract**

Power consumption reduction device in the form of an electronic device that operates as an interface between any power supply source and consumption demand. The system, with less amperage at the input, delivers the total power required according to demand. In its internal systems, three fundamental variants regulated: line impedance, phase angle and reactive power flow. About input power supply, when variations in the fundamental frequencies, simulates these frequencies as if the variations were not being produced. Besides, optimizes consumption, supplying each device with the power required for optimal operation, also absorbing voltage peaks, protecting the operating life of devices or household appliances. Also increases supply capacity and, if used in the public network, in distribution transformers, it improves the voltage in the network, reduces losses in cables and also reduces heating. Provides an overall reduction in power if used in all or part of the circuits and prevents penalties.

## Description

### FIELD OF THE INVENTION

Before the economic and environmental constraints, as well as the structure of the electricity sector locally and globally, arises the concept of the Power consumption reduction device, system belonging to the sector of electronic technology, which is the branch of physics and specialization the engineering that studies and uses systems whose operation is based on driving and control of the flow of electrons or other electrically charged particle.

### BACKGROUND OF THE INVENTION

In research about the state of the art performed for the priority application we requested to the Onapi Support Centre for Technology and Innovation (CATI), on 11 March 2014
Number 018-2014, we were provided with several patent numbers, which included search fields and descriptions thereof. (See CD with copy of each patent and annexes included therein).

For example: patent ES 2180357 A1**,** publication date 1/2/2003, for alternating-continuous electric power converter.

Another patent, the ES2335058T3**,** publication date 11/3/2009, refers to the procedure and device for loading a cargo of electrical energy storage element.

Patent No. ES2340074T3, publication date 13/8/2008, refers to a device for the feeding of electric power from a power source.

Patent No. **MXPA**97005, publication date 14/10/2011, refers to a voltage and dynamic current regulator for an alternating current transmission line.

After reviewing them all, these patents are the most relevant. None patent were found having the present invention technologies, design or concept; even though could may they contain similar pieces or parts.

### SUMMARY OF THE INVENTION

One of the main objects of the present invention is, in the first place, reduce the amount of electricity required, powered by existing actual consumption, anyone who is the source. This is achieved through the consumer computers that require this energy when operated gearboxes for electric consumption as interface between such consumption and supply equipment; without altering the manufacturer's established consumption of such equipment when unit the unit of Power consumption reduction device is placed as as interface. In addition, they even serve as a protection mechanism for possible voltage fluctuations.

It is a second object of this invention in connection with the power public distribution, take advantage of the existing facilities infrastructure in the low voltage distributors transformers; by installing this equipment at any point in the energy supply or consumption, or specifically, interconnecting it inside the customer building between the supply, after the kilowatts-hour counter assigned to the final consumer.

We consider these objects as priority and especially convenient since the benefit is distributed to both, the distributor and the consumer customer. It is suitable as a priority in the neighborhoods where the majority of the consumers are low-income, offices, government buildings, such as hospitals, schools, military installations, water plants, etc.

It is another object of this invention to provide the reduction of the power consume with the use of this apparatus at national level, because it would bring macro-economic savings in favor of users, distributors and the Government in general, reducing their fuel consumption, and thus greatly reducing air pollution and leakage of foreign exchange.

This electronic equipment can be used in most or all circuits as distributed generation by the installation of equipment in the user buildings.

### BRIEF DESCRIPTION OF THE DRAWINGS

**Figure 1****-** This is the most generic diagram of the design and assembly of all components and basic parts of the power consumption reducer. It shows a block diagram, but their parts are represented with figures and numbers, identified specifically in the description. These part numbers are the same in the following figures.
**Figure 1-A****-** This is similar to Figure 1. Includes a minor reference numbers (parts A, B, C, D and E) of secondary coil assemblies for minor applications.
**Figure 1-B****-** This is similar to Fig. 1-A. It does not include primary and secondary coil assemblies (21 and 22) at the exit of the transistors (16).
**Figure 2****-** This figure shows the arrangement of an power consumption reducer of a larger scale. It includes three systems at the same time (such as those shown in the previous figures) that are formed to connect to three alternating monophasic lines of equal frequency and magnitude (V therefore, effective value) that have a certain phase difference between them, around 120Q, and they are given in a particular order. 1-A, and 1-B and 1-C.
**Figure 3****-** This figure or diagram reveals the design of a reducer (R2) with additional elements (27 and 28), which specialize it to operate in the consumption of a monophasic conventional air conditioner compressor.
**Figure 4****-** This figure describes the plane corresponding to the use of power consumption reducer, adapted to a conventional or central air-conditioning. It has the same peculiarity that the one shown in figure 2 to operate in three-phasic sub-stations.

### DETAILED DESCRIPTION

The power consumption reduction device is an electronic circuit that, with a supply entry energy power of a 30% or less, applied by a supplier source, being even the public network (the network) or another source, delivery or restores in its outputs 100% of the demanded power, which is equal to a saving of above 70% of the demanded consumption. If the equipment is installed after the meter that is inside the building the supplier source will be the one saving always, but it would be also shown in favor of the user of the assigned meter. The savings is proportional to the consumption of the user or customer equipment. The energy reduction of this device does not interfere the powers of consumption of such consumer equipment or appliances. This savings provided by the electronic device is internally produced by conversions, and the type of combinations in the devices that carry in its system. This amplifies the receiving power, within their established capacity.

On the other hand, if this electronic device is installed before the kilowatts-hour meter assigned to the consumer, the savings will be received by the supplier source only. EI customer meter will mark its regular consumption.

In addition to reducing consumption in their inputs, the electronic equipment controls and optimizes delivery powers to users' energy equipment. It does not allow electric fluctuations, even if they occur in generation. It simulates the frequencies even if there are distortions in the network or in the energetic source in question.

This electronic equipment also does not allow it to exceed its consumption or power. Otherwise, immediately cut off the electrical power by reconnecting at a set time.

The electronic technology of this system can be independently applied separately in electric motors, electric stoves, air conditioners, conventional single-phase and three-phase power plants, to the fridges in the cellars, to the hair dryers, to the washing machines , etc. In the case of an electric motor it is special, because the oscillation system of this electronic equipment can be synchronized so that it starts the torque gently. In addition, it can be built in different voltages, frequencies and powers. In the process of planning the installations of this equipment (the Reductor), the future parameters, both technical and economic, are taken into account in order to achieve an optimal solution or minimum cost. Its positive impact on the supply planning process in the system is evident, for the consumer first and at the same time, for the distribution of alternating current. The electronic apparatus incorporates static controllers and other components based on electronic power to improve control and increase the transfer capacity of electrical power. It has an automatic control panel, consisting of an electronic controller that analyzes the energy absorbed by the receiving equipment, and adapts the consumption to the actual demanded load, achieving the optimization of different electrical parameters in the installation.

The power consumption reduction device, after the inputs (2) are connected to the power supply, a set of primary turns (8) induces a magnetization in a core (8) of steel sheets optimized with an alloy of 8.5 degrees of silicon . This induction generates excellent conduction, both magnetic and electrical, in the sets of secondary turns (3), thus allowing a better operation in the system. The secondary turns are composed of conductive materials with ten equal turns of sets of turns (3). This system of sets of turns (8) and (3), primary and secondary, can also be divided independently by two systems or more equal parts, individually combined. In this way the turns are more compact, even have better performance in the currents, and are subject to mathematical calculations.

In this system each unit of secondary turns (3) reduces the primary input voltage by 89% (8). Likewise, as the voltage was reduced by that magnitude, the amperage in each secondary unit (3) also increases by the same proportion by 89%. For this to have 100% sustainability and the voltage is not reduced when there is consumption in this system, the core must have the silicon alloy as mentioned above. In this way the more electronic devices will work more efficiently. Ferrite cores are also very efficient.

The secondary voltages (3) are rectified (11) separately and converted into full-wave pulsating currents (11). These rectifications (11) are converted by bridges of special diodes of high currents. Therefore, these currents at this point (11) have been redoubled by the conversion of alternates to pulsants. And they are separately filtered (12) with high capacitance capacitors (12) at each point of the ten sets of turns (3). These high currents at this point are filtered (12) act separately as batteries. These voltages are then regulated separately (13). Since the power factor is a qualitative and quantitative indicator of the correct utilization of the electric energy, the primary voltage reductions 8 in the induction of the secondary voltages 3 after being regulated are connected in polarized cascades 15.

It should be noted that all the secondary voltages (3) being regulated are identical and have an equivalence of voltages. The amperage of one of the sets of secondary turns (3) is the amperage of the sum of the voltages in cascades (15).

By the reduction of the primary current consumption (2), by the conversion in the induction and reduction of the secondary voltages (3), by the quantity and the excess of secondary amperages (3) and by the voltages in cascades (15) of (13), this system sufficiently corrects the power factor at this point. The value of the power factor is determined by the type of loads connected to the output of this system (25). In order to be able to determine it in primary consumption (8), it is first necessary to consume a large part of energy in the area of secondary systems (3).

The outgoing voltage, which is the total of the cascades 15, is connected to a high current transistorized electronic circuit 16. These (the transistors) modify the path of the electrons, again by oscillating the sum of the direct current voltages (15) to the frequencies of those of the network (2). The number of transistors will depend on the magnitude of the power in the apparatus. From here, the Power consumption reduction device delivers to the energy-consuming equipment a new electric power generated by the power supply source.

The transistor circuit (16) has in its gates (20) an electronic circuit (18) which connects a reducing transformer to milli-amps. The primary 19 thereof connects to the input lines 2, and the secondary 17 connects to an electronic circuit 18 which regulates the frequencies from the input lines 2. This circuit extracts the sinusoidal pulses, stabilizes them and simulates them by connecting them to the gates (20) of said transistors. If there is a frequency variation in the power inputs at the supply source (2), this system does not allow this in the oscillations in the transistors (16). And these oscillations are exactly the same as the outer energy input lines (2). In addition, for this circuit 18 the protruding voltages in the transistors 16 and parity in the output 25 can be controlled, placing a voltage at will that is most suitable for the consumption of the receiving equipment. Also check the power on and off by switching off the oscillations.

The alternating high high voltage of the transistors (16) has a sinusoidal path identical to that of the supply sources (2), and is connected to another set of primary turns (21) in a core of silicon-steel sheets with the same alloy of Silicon already mentioned. Thus, in a set of secondary voltage-reducing coils 22, a central voltage (N), a two-phase voltage is generated, the protruding voltage (25) being produced in the equipment.

Both the supply input voltage (2) and the output voltage (25) in this equipment are monitored through the auto-volt circuits (30, 31 and 32). EI of the inlet (32) operates by connecting or disconnecting the rims (33 and 34), switching off the power consumption in case of fluctuation in the energy (2).

Equally, the auto-volt (30 and 31) in this equipment, if there is a fault in the entire circuit path in general, the system also disconnects the rims (33 and 34). The auto-volts (30 and 31) work by comparing voltages.

Note: It is important that the primary winding (8) at the supply port (2), and the primary (21) connected to the transistors (16) are reinforced within the possibilities according to the calculation of the winding.

Returning to the set of primary turns at the input (8) of this electronic equipment, in its operation will always appear the reactive energy by the magnetism produced in the nucleus.

The reactive power is not a power actually consumed in the installation that does not produce useful work because its average value is zero. However, electricity companies measure it at the kilo-watt-hour counter assigned to the consumer if certain values are exceeded; Include a penalty term for reactive in the electric bill. Therefore, this energy even if it is not immediately converted into other forms, contributes to increase the total power transiting between the power supply apparatus. There is a phase shift in the energy from the magnetic induction (8) that this system actually needs for its operation. The offset is more or less depending on the output consumption (25). Therefore, in this phenomenon of creation of the magnetic field 8, there is a division of the energy delivered by the external source or energy supplier concerned. One part is used for the generation of work (called active energy) and another for the generation of the magnetic field (called reactive energy).

In the Power consumption reduction device, even if the output (25) is connected to a resistive or inductive consumption, at the input (2) the reactive energy will always appear. As there is a reactive power consumption at the input (2) of this electronic equipment which varies depending on the demand conditions connected at the output (25) in this apparatus, there is a peripheral automatic compensation system (4, 5, 6 and 7), The purpose of which is to constantly check the needs of compensating that, depending on the consumption at the output (25) of the equipment, the reactive energy reflex at the input (2) is canceled, purifying the active energy.

The reactive elimination at the input (2), in this electronic system, is achieved with an intelligent circuit (4 and 5). For this, a battery of regulated capacitors (6 and 7) is required. The device contains internal regulators in the circuits (4 and 5) which, from the current and voltage signals from the installation (25), are able to connect and / or disconnect capacitances (6 and 7) in those necessary steps To achieve the level of compensation required.

The advantages of the compensation (4 and 5) And the advantages of the voltage reduction in the primary (8) in this electronic system are as follows: it increases the capacity in the supply, and if it is in the public network, in the transformers Distributors, improves the voltage in the network, decrease the losses in the cables, and also decreases the heating. The Reductor works more efficiently due to the increase of secondary currents and voltages (3); An overall reduction in energy is achieved and penalties are avoided.

This management system at the input (2) of the Electric Power Reducer, (2) offered by this automatic compensation system, (4 and 5) allows monitoring of power and reactive power. The reactive current produces a phase shift between the voltage wave and the current wave; They would be in phase and the power factor would be the unit. The phase shift between the voltage and current wave produced by the reactive current is canceled out by this control system.

At the output of the equipment (25) other electronic systems (23 and 24) are connected, which function as energy optimizers for each output phase.

This automatic control board (23 and 24) consists of an electronic power controller embedded in the circuits that analyze the energy (23 and 24) absorbed by the consumer equipment (25). And adapts the consumption to their actual demand, alike, achieving the optimization of different electrical parameters of the installation or consumption.

In addition, these electronic systems (23 and 24) control the voltage, currents and frequencies in the output phases (P, N, and P) (25). Also in the sets of primary turns (21) and secondary turns (22). And they adapt them to the needs of the installation. As for the phase output voltage, it is controlled with auto-volt (30 and 31). This system does not allow the output voltage (25) to increase, but not to be reduced out of schedule.

In this way, these control circuits (4 and 5), (23 and 24) achieve savings by compensating and causing the electronic system to operate in general terms, within the programmed values, through the microchips (pic -micro) installed in the auto-volt circuits (30 and 31). You get a higher performance and you avoid wasting energy.

This electronic control (23 and 24) is programmed a mathematical algorithm very similar to the circuit at the input of the supply (4) and (5) which achieves the compensation of a mathematical form, within the most efficient values.

These controls 23 and 24, as well as the controls in the reactive current at the input 2 and 4, operate "thyristors" which are those acting on the input and output lines 25.) To optimize the flow and compensate the intensity to the load of the installation (25).

When more energy is demanded, it is at the moment in which the start-up of consumer equipment (appliances) takes place. At the start of these a higher peak of intensity is caused than during its operation. The peak is absorbed by the electronic combinations in this system.

This electronic equipment allows controlling three fundamental variants, which are: line impedance, phase angle and reactive power flow.

With this process of this apparatus already described, the current in the conductors is reduced, so also the losses in these are reduced. In this way, the reactive power costs invoiced by the power plants are saved.

The equipment can block unwanted ring flow. This allows to increase the capacity of the lines. It also provides the possibility to operate lines close to their thermal limits, maintaining or improving the safety and reliability of the system.

It allows to use techniques similar to those of "artificial intelligence", to forecast the energy demand and to make the optimal decisions on the sources of supply to be used.

These decisions are based on rational criteria, such as the characteristics of the centers of consumption, the expectations of supply, the characteristics of the demand and the previous experiences.

This technology, if used in the electricity grid, allows to reduce the consumption and optimize the exploitation of the system through the demand of the customers. It implies a greater generalized energy efficiency and a considerable reduction of costs to the network and the users. In addition, it is suitable for environments where the power supply fluctuates, is interrupted, or is scarce and we want to correct and improve it.

In the Power consumption reduction device, in order to have a significant energy consumption reflex at the input (2) of the supply, at the output (25) a large part of the amperage must have been consumed in the voltage reductions, In the area of the sets of secondary turns (3, 11, 12, and 13). It is due to amplifications of amperages.

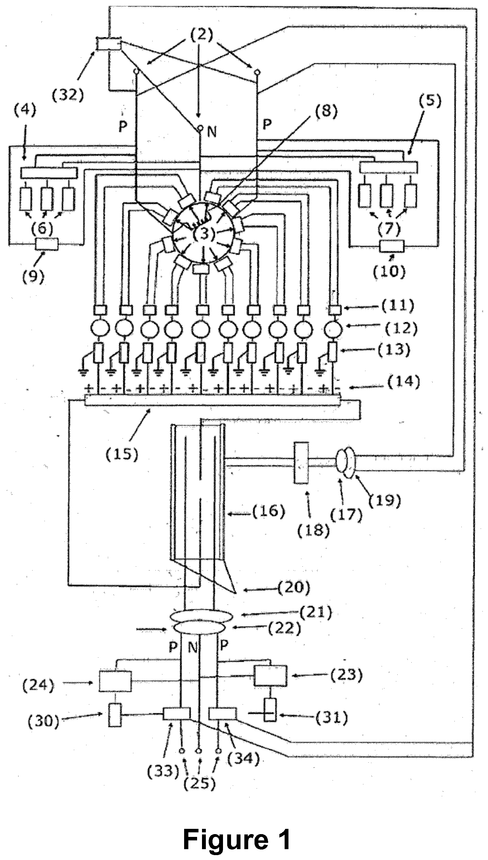

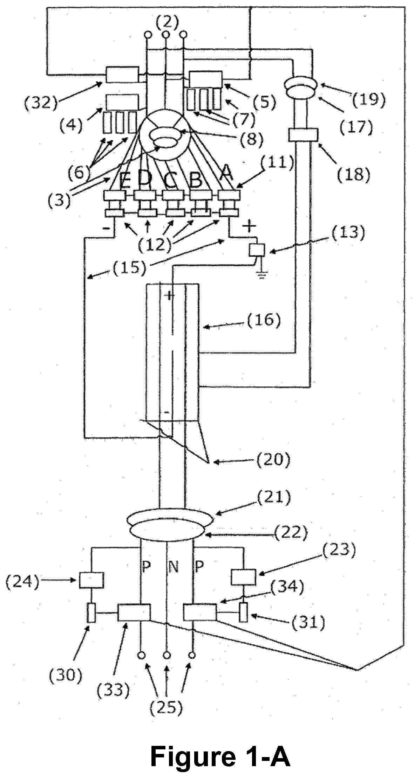

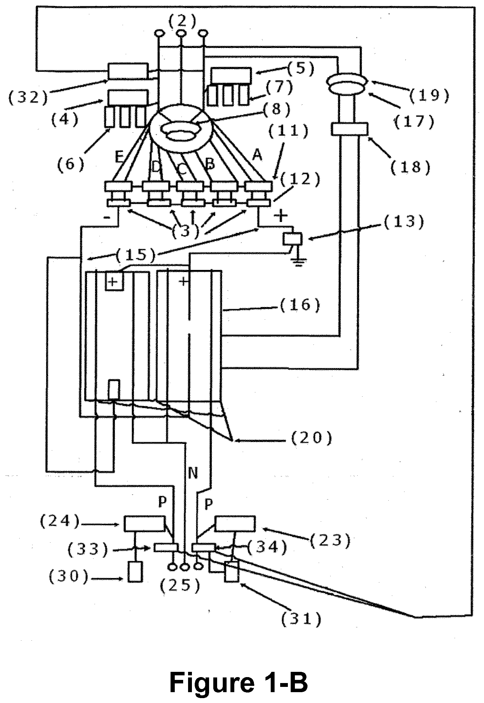

Modifications or variations of the Electric Power Reducers are included to expand the Description, as in the case of Figure 1-A. This is similar to Figure 1 already described. It includes a smaller number of derivations (parts A, B, C, or Y E) of secondary turns sets for smaller applications. This circuit uses a single regulator (13) for the direct current voltage, although its rectifications (11) and current filtering (12) are identical to said Figure 1, and has all the functions already mentioned.

The case of Figure 1-B is similar to that of Fig. 1-A. It leaves the system of the sets of primary and secondary turns (21 and 22) at the output of the transistors (16). The rectification (11) and filtration (12) systems are the same. It also uses a single regulator (13) in direct current. It uses two transistor boards (16) combined in phases, so that the center which is the neutral (N) can be extracted so that said circuit has its two output phases (25).

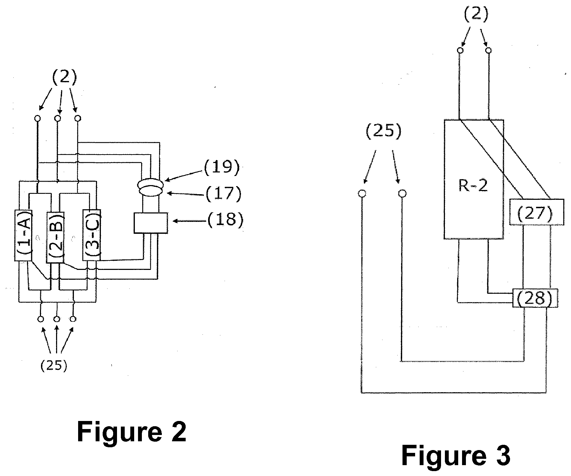

Regarding the plane of Figure 2, this shows the design of a larger scale Reductor, as it includes three Reductores in turn (like Figure 1) connected in delta connections and that are identified with parts 1-A, 1 -BY 1-C. They oscillate out of phase at 120 ° in combination with the supply lines. Through components (19 and 17) it is a three-phase oscillation system composed of three Reductors such as Figure 1. With the number (25) the current outlets are represented.

Regarding the case or variant of Figure 3, it reveals the design of a Reducer (R2), such as Figure 1. This specializes to operate on the compressor consumption of an air conditioner or conventional power plants.

Of the additional elements (27 and 28), the (27) is a self-volt control which, when the compressor is started, consumes more than the normal consumption of the compressor. Therefore, the auto-volt allows the rile (28) to first transfer the power of the Network to the compressor, by pulling it out. After a few seconds, the auto-volt allows the relay (28) to change with the voltage of the Electric Power Reducer. With the number (25) the output power outlet is represented. These equipment can be built for all types of voltage and also work for cold rooms.

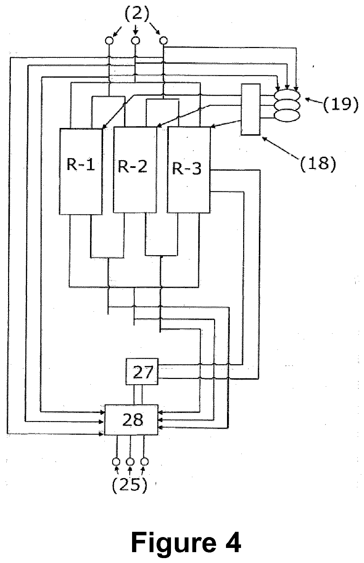

With respect to the case of Figure 4, this figure describes the plane that corresponds to the use of Reductors to adapt them to an air conditioning central in three-phase sub-stations. The connections are identical to those of Figure 2, they are combined equipment. Each system is the same as Figure 1. They are connected in delta to the supply lines. Likewise, their outputs are also connected in delta. They have the additional elements (27 and 28). EI (27) is a three-phase autovolt that first allows lines that are phase-shifted to 120Q in the supplying energy, first feeding the compressor of the air conditioner, through the relay (28). His contacts are dobies, three up and three down, and are three-phase. After a few seconds they change to power the compressor with the voltage of the Power consumption reduction device Three-Phase.

All electrical appliances supplying energy, whether in the form of light, heat, sound, rotation, movement, etc. consume an amount of electrical energy equivalent to that delivered directly from the source of electricity to which they are connected. This energy consumed is called Activa, which is recorded in the meters and is billed to the consumer by the respective electricity supply companies. Some devices, due to their principle of operation, take from the source of electricity an amount of energy greater than that registered by the meter: a part of this energy is the already mentioned Active energy. The remaining part is not actually consumed but entertained between the apparatus and the electricity grid.

This entertaining energy is called Reactive and is not registered by the meters of the tariff group to which the consortia belong. The total energy (formed by the Active and the Reactive), which is taken from the electricity grid, is called Apparent and is the one that finally must be transported to the point of consumption.

The energy taken by the apparatus and fed from the AC power source has to be converted to direct current. This conversion causes a phase shift and loses its sinusoidal shape, resulting in a low power factor.

The fact of transporting an energy greater than the one actually consumed imposes the need for the drivers, transformers and other devices involved in the supply of this energy to be more robust, thus raising the cost of the distribution system . In addition, the resulting effect of a large number of users in this condition causes a significant decrease in the quality of the electricity service (voltage fluctuations, power outages, etc.). For these reasons, distribution companies take measures that tend to compensate financially for this situation (penalizing or billing the use of Reactive energy) or to regularize it (inducing users to correct their installations and minimize Reactive energy), Which is achieved largely with the Power consumption reduction device. In addition to reducing consumption per se, this electronic device, due to its functions already mentioned, must be generalized in all the circuits that are possible, especially in the circuits that leave lost.

With the descriptions and their parts described above and explained, we have disclosed the invention and its most relevant variations. These, in general terms, were manufactured and experimented; That is, they were "reduced to practice". Now, the invention can be produced in innumerable variations, scales and shapes, even parts and assemblies, provided that the functions assigned to the parts, and the arrangements between said parts, previously described and disclosed, are fulfilled. Therefore, the scope claimed for the originality and novelty of the property of our invention must be determined by the scope of the CLAIMS that we will present below.

## Claims

1. What is claimed is a system and combination of electronic devices for the increase of the electric potency and/or the reduction of the energy consumption to a source of supply of energy of electric current applied to any scale of consumption, characterized to comprise at least:
A) A primary reactance connected to the power supply conductor, said reactance is controlled to electronically regulated and contains at least two to several secondary turns;
B) Control circuits, transistors, rectifiers, capacitors and regulators, resistors, diodes; and
C) Primary and secondary controller circuits, voltage and current sensors, resistors, pic-micro integrated, driver device, optocouplers, optimized silicon core, rile, etc.

2. Control devices according to claim **1**, further **characterized in that** they comprise an electronic circuit, which controls the input reactive current, it is a peripheral compensation circuit.

3. Control devices according to claim **2**, which are furthermore **characterized by** the systems and combinations in the coupling in the set of secondary turns, for the alteration and control of voltages and currents.

4. Control devices according to claim **3**, which are also characterized to contain a system of high current rectifier bridges to rectify the alternating currents, and due to their optimization also help, due to their internal chemical characteristics, to a better coupling, in order to increase the independent pulsating voltage, adapting its internal resistances for a better conduction.

5. Control devices according to claim **4**, **characterized in that** they further comprise pulsating current filtering systems, which independently filter high capacitance capacitors, separate torque, and function as batteries.

6. Control devices, according to claim **5**, **characterized in that** they further comprise a system with electronic devices also optimized for regulations, separately.

7. Control devices according to claim **6**, **characterized in that** they comprise a system of regulated voltages and that are polarized in cascades at equal voltages.

8. Control devices, according to claim **7**, which are further characterized because they have a transistor system also optimized in their chemical conductions, this system changes the direction and direction of the electrons, as well as the oscillations of the conductors in the input sources, in the power supply.

9. Control devices, according to claim **8**, **characterized in that** they also comprise another magnetization system, also optimized with silicon, it contains a system of sets of primary and secondary turns that reduce the high primary voltage coming from the transistor circuit and increase the secondary output currents, with an output potential that is adapted to the needs of the consumption and that also carries a center that Is a neutral to deliver the outgoing energy.

10. Control devices, according to claim **9**, which are further characterized because the energy delivered by the equipment, for the demand, is optimized separately or in phases by an automatic control panel that analyzes the energy absorbed by the consumer equipment.

11. Control devices, according to claim **10**, which are **characterized in that** both the inputs and the outputs have an auto-volt voltage control, to disconnect the demand in case of fluctuations outside the programmed parameters.

12. What is claimed is a system and combinations of electronic devices, claim **1**, **characterized by** additionally combining a control circuit (single-phase or three-phase auto-volt) for increasing electrical power and/or reducing energy consumption, such as Interface in an electric current power supply source applied to a single-phase or three-phase air conditioning compressor.
